# FASCICULE DE BREVET EUROPEEN

(11) **EP 2 387 338 B1**
(45) Date de publication et mention de la délivrance du brevet: **28.11.2018**
(21) Numéro de dépôt: 10706019.6
(22) Date de dépôt: 14.01.2010
(51) Int. Cl.: A47J 27/09, A47J 27/08

(54) **AUTOCUISEUR MUNI D'UN DISPOSITIF ELECTRONIQUE D'INFORMATION**
SCHNELLKOCHTOPF MIT ELEKTRONISCHER INFORMATIONSVORRICHTUNG
PRESSURE COOKER PROVIDED WITH AN ELECTRONIC INFORMATION DEVICE

(30) Priorité: 15.01.2009 FR 0950237
(43) Date de publication de la demande: 23.11.2011
(73) Titulaire: SEB S.A., 69130 Ecully (FR)
(72) Inventeur: BARAILLE, Eric, Laurent, F-21121 Fontaine Les Dijon (FR); MURAT, Pascal, F-21121 Fontaine Les Dijon (FR)
(74) Mandataire: Weber, Jean-François
(86) Numéro de dépôt international: PCT/FR2010/050051
(87) Numéro de publication internationale: WO 2010/081994

(56) Documents cités:
- EP-A- 1 593 329
- WO-A-2008/154763
- DE-A1- 2 702 906
- DE-A1- 2 910 789
- DE-A1- 3 408 436
- DE-B3- 10 360 016
- FR-A- 2 634 914
- FR-A1- 2 753 874
- JP-A- 2007 155 281

## Description

### DOMAINE TECHNIQUE

La présente invention se rapporte au domaine technique général des appareils de cuisson domestiques, et en particulier au secteur des autocuiseurs, c'est à dire des appareils de cuisson sous pression destinés à assurer la cuisson sous pression de vapeur des aliments contenus en leur sein.

La présente invention concerne plus particulièrement un appareil de cuisson domestique comprenant d'une part au moins un premier organe de commande mobile entre une pluralité de positions et conçu pour permettre à un utilisateur d'agir sur le fonctionnement dudit appareil, et d'autre part un dispositif d'information relié audit premier organe de commande pour générer un signal caractéristique de la position dudit premier organe de commande.

### TECHNIQUE ANTERIEURE

Les autocuiseurs domestiques sont bien connus. Ils comprennent habituellement une cuve destinée à cuire les aliments et un couvercle destiné à être rapporté verrouillé sur la cuve pour former avec cette dernière une enceinte de cuisson étanche. Un tel autocuiseur est classiquement destiné à être soumis à influence d'une source de chauffe (comme par exemple une plaque de cuisson) de manière à permettre la montée en pression et en température de l'enceinte et ainsi la cuisson sous pression de vapeur des aliments contenus dans cette dernière.

Le fonctionnement de ces autocuiseurs connus est gouverné par différents organes, tels que par exemple :
- un moyen de verrouillage/déverrouillage capable d'assurer le verrouillage et le déverrouillage du couvercle relativement à la cuve,
- une soupape de régulation de pression permettant de maintenir la pression dans l'enceinte à un niveau prédéterminé appelé pression de fonctionnement,
- et un organe de décompression, permettant de faire chuter la pression au sein de l'enceinte, notamment en fin de processus de cuisson, pour que l'utilisateur puisse ouvrir le couvercle dans des conditions de sécurité acceptables.

Chacune de ces fonctions peut être commandée par l'utilisateur grâce à un ou plusieurs organes de commande correspondant(s) destiné(s) à être actionné(s) manuellement par l'utilisateur.

On connaît en particulier un appareil de cuisson sous pression doté d'un organe de commande conçu pour permettre à l'utilisateur d'agir sur le niveau de pression régnant dans l'enceinte de pression, et qui permet plus précisément à l'utilisateur de placer l'appareil dans un mode de fonctionnement spécifique parmi les modes suivants :
- un mode de fuite, dans lequel l'enceinte de cuisson est mise en communication avec l'extérieur, en vue de faire chuter la pression à l'intérieur de l'appareil en fin de cuisson, ou au contraire d'empêcher la pression de monter au sein de l'appareil ;
- et une pluralité de modes de cuisson, correspondant chacun à une pression de régulation particulière, plus ou moins importante et destinée à certains types d'aliments.

Cet organe de commande est plus précisément constitué, dans l'appareil de l'art antérieur précité, par une couronne montée à rotation autour d'un axe vertical correspondant à l'axe de symétrie général de l'appareil.

Plus précisément, dans cet appareil de l'art antérieur, la couronne rotative interagit avec la soupape de régulation pour modifier le tarage de cette dernière. Cette couronne de sélection de pression permet ainsi de sélectionner trois positions de pression correspondant à trois tarages différents de la soupape, et une position d'ouverture correspondant à un tarage minimal de la soupape permettant à cette dernière de s'ouvrir dès qu'une pression extrêmement basse, compatible avec l'ouverture sécurisée du couvercle, règne dans l'enceinte de cuisson. Dans cet appareil de l'art antérieur, la couronne de sélection de pression est montée à rotation sur une platine elle-même fixée au couvercle. La platine est pourvue de quatre pictogrammes correspondant respectivement à la position d'ouverture et aux trois positions de cuisson que peut adopter la couronne de sélection de pression. Cette dernière est elle-même pourvue d'un repère qui est destiné à se trouver en face d'un pictogramme lorsque la couronne de sélection de pression se trouve dans la position correspondante. L'utilisateur peut ainsi, en mettant en correspondance le repère de la couronne de sélection de pression avec l'un ou l'autre des quatre pictogrammes présents sur la platine, sélectionner une position particulière correspondant soit à la position d'ouverture, soit à l'une des trois positions de cuisson prévues. Le passage de l'une à l'autre des positions en question s'effectue, comme exposé précédemment, par rotation de la couronne de sélection de pression, ce qui entraîne le déplacement angulaire du repère qui peut passer ainsi d'un pictogramme à l'autre. Grâce à ce système de mise en correspondance d'un repère embarqué sur la couronne de sélection de pression avec un pictogramme fixe, l'utilisateur est informé à tout moment de la position dans laquelle se trouve la couronne de sélection de pression.

L'utilisateur peut ainsi s'assurer que la position de la couronne de sélection de pression correspond bien à l'usage qu'il souhaite faire de l'appareil.

Cet autocuiseur de l'art antérieur, s'il donne généralement toute satisfaction, n'en présente pas moins certains inconvénients.

Ainsi, l'autocuiseur connu conforme à la description qui précède laisse apparaître en permanence à la vue de l'utilisateur tous les pictogrammes présents sur la platine, de sorte que l'utilisateur n'est pas directement capable de savoir en un coup d'oeil quelle est la position instantanée de la couronne de sélection de pression et donc quel est le mode de fonctionnement de l'autocuiseur qui est sélectionné. Afin d'accéder à l'information recherchée, l'utilisateur est en effet contraint de rechercher, par une démarche positive, quel est le pictogramme avec lequel le repère concorde. Il est ainsi fréquent, en particulier pour un utilisateur non averti, de ne pas avoir ce réflexe et par conséquent de ne pas remarquer que la position de la couronne de sélection de pression ne correspond pas à celle souhaitée.

Ce déficit d'ergonomie et de clarté d'information peut conduire l'utilisateur à ne pas utiliser correctement son autocuiseur (l'utilisateur pensant par exemple avoir lancé un cycle de cuisson sous pression alors qu'il a laissé, sans s'en apercevoir, la couronne de sélection de pression en position d'ouverture) voire peut entraîner, dans le cas le plus critique et en combinaison avec d'autres facteurs, un risque éventuel d'accident, notamment par brûlure. Ce problème est d'autant plus prégnant que le repère réalisé sur la couronne de sélection de pression, tout comme les pictogrammes réalisés sur la platine, peuvent être relativement difficiles à distinguer visuellement, de sorte que leur concordance éventuelle est bien entendu elle aussi difficile à distinguer.

Cela provient essentiellement du fait que pour des raisons d'organisation industrielle et de durabilité, le repère et les pictogrammes sont généralement réalisés par simple formage (en creux ou en relief) de la matière constituant respectivement la couronne et le capot, sans coloration additionnelle. Le repère et les pictogrammes apparaissent ainsi en ton sur ton relativement à la pièce qui les porte, ce qui les rend de ce fait difficile à distinguer, en particulier pour l'utilisateur non averti ou souffrant d'une déficience visuelle.

En outre, la visualisation permanente par l'utilisateur de l'ensemble des pictogrammes peut être de nature à fausser la perception qu'à l'utilisateur du degré de difficulté d'utilisation de son autocuiseur. Ce degré de difficulté est en réalité faible voire nul, mais la multiplication des symboles visuels peut laisser à penser à certains utilisateurs que leur autocuiseur est un dispositif dont le pilotage est extrêmement complexe et risqué, et qu'il nécessite de ce fait un apprentissage long et rébarbatif.

Afin de remédier à ces différents inconvénients, il a été proposé un système de fenêtre dans laquelle apparaît un pictogramme correspondant à la position de l'organe de commande.

Un tel système à fenêtre, s'il peut constituer un progrès par rapport à l'art antérieur précédemment décrit n'est cependant pas adapté à toutes les conceptions d'appareils de cuisson, et peut en outre contribuer, pour certaines conceptions et constructions, à augmenter le coût de revient de l'appareil et à en compliquer la conception.

Ce système à fenêtre ne constitue pas en outre la solution idéale en matière d'information de l'utilisateur, et ne permet pas de rassurer complètement la totalité des utilisateurs quant à l'usage qu'ils font de leur autocuiseur.

On connaît par ailleurs du document DE3408436A1 un four avec des lampes et un commutateur permettant d'agir sur les lampes par l'intermédiaire d'un circuit électrique incluant un curseur et des pistes conductrices.

### EXPOSE DE L'INVENTION

Les objets assignés à l'invention visent en conséquence à porter remède aux divers inconvénients énumérés précédemment et à proposer un nouvel appareil de cuisson domestique, constitué de préférence par un autocuiseur, qui est de conception extrêmement fiable et compacte, et dont l'utilisation est particulièrement simple, intuitive, ergonomique et sûre.

Un autre objet de l'invention vise à proposer un nouvel appareil de cuisson domestique, constitué de préférence par un autocuiseur, dont la conception repose sur des principes particulièrement simples, éprouvés et bon marché.

Un autre objet de l'invention vise à proposer un nouvel appareil de cuisson domestique, constitué de préférence par un autocuiseur, qui est particulièrement bon marché, robuste, et dont la fabrication est facilitée.

Un autre objet de l'invention vise à proposer un nouvel appareil de cuisson domestique, constitué de préférence par un autocuiseur, qui évite à l'utilisateur de lancer un cycle de cuisson sans avoir au préalable sélectionné une position de cuisson.

Un autre objet de l'invention vise à proposer un nouvel appareil domestique de cuisson, et en particulier un autocuiseur, dont les fonctionnalités et l'utilisation sont améliorées et qui permet à l'utilisateur de surveiller le cycle de cuisson de manière simple et efficace.

Un autre objet de l'invention vise à proposer un nouvel appareil de cuisson domestique, et en particulier un autocuiseur, dont la conception générale est sensiblement aussi simple, légère et compacte que dans l'art antérieur tout en permettant de nouvelles fonctionnalités.

Les objets assignés à l'invention sont atteints à l'aide d'un appareil de cuisson domestique selon la revendication 1.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue partielle en perspective, un détail de réalisation d'un autocuiseur domestique conforme à l'invention.
- La figure 2 illustre le détail de la figure 1 selon une vue écorchée.
- La figure 3 illustre, selon une vue de dessus, le détail de réalisation de la figure 3, le premier organe de commande de l'appareil se trouvant dans une position d'ouverture permettant de ramener ou de maintenir la pression régnant dans l'appareil à une valeur compatible avec une ouverture sécurisée de l'appareil.
- La figure 4 illustre, selon une vue écorchée en coupe, le détail de réalisation des figures 1 à 3.
- La figure 5 est une vue en taille réduite de la figure 3.
- La figure 6 illustre, selon une vue de dessus, le détail de la figure 5 avec le premier organe de commande dans une première position de cuisson.
- La figure 7 illustre, selon une vue de dessus, le détail des figures 5 et 6 avec le premier organe de commande dans une deuxième position de cuisson.
- La figure 8 illustre, selon une vue de dessus, le détail des figures 5 à 7 avec le premier organe de commande dans une troisième position de cuisson.
- La figure 9 illustre, selon une vue de dessus, le détail des figures 5 à 8 avec le premier organe de commande dans une quatrième position de cuisson.

### MEILLEURE MANIERE DE REALISER L'INVENTION

L'invention concerne un appareil de cuisson domestique 1, c'est-à-dire un ustensile de cuisine qui est spécifiquement conçu pour permettre la cuisson d'aliments dans un cadre familial. A cet effet, l'appareil 1 conforme à l'invention présente avantageusement un caractère portatif (c'est-à-dire qu'il peut être déplacé manuellement) et indépendant. De façon particulièrement préférentielle, et comme illustré aux figures, l'appareil de cuisson domestique 1 est constitué par un autocuiseur, c'est-à-dire qu'il forme un appareil de cuisson d'aliments sous pression. Dans ce cas, l'appareil de cuisson 1 est conçu pour assurer la cuisson d'aliments à un niveau de pression sensiblement supérieur à la pression atmosphérique, et par exemple excédant ladite pression atmosphérique d'une valeur comprise entre 10 et 90 kPa.

De façon préférentielle l'appareil 1 conforme à l'invention est conçu pour monter en pression exclusivement sous l'effet d'une source de chauffe (embarquée ou externe), sans apport de pression externe.

L'appareil de cuisson domestique 1 conforme à l'invention comprend avantageusement une cuve (non illustrée) formant un récipient de cuisson et destinée à accueillir les aliments à cuire. L'appareil 1 conforme à l'invention comprend également avantageusement un couvercle 3 destiné à être rapporté et verrouillé sur la cuve pour former avec cette dernière une enceinte de cuisson sensiblement étanche, c'est-à-dire suffisamment hermétique pour permettre une montée en pression de l'appareil 1. Le couvercle 3 est de préférence de forme générale discoïde, et s'étend avantageusement dans un plan moyen sensiblement parallèle au plan moyen d'extension du fond de la cuve 2 lorsqu'il est rapporté verrouillé sur cette dernière. Le couvercle 3 est de préférence conçu pour être verrouillé ou déverrouillé sur la cuve grâce à un moyen de verrouillage/déverrouillage du couvercle 3 relativement à la cuve. Le verrouillage du couvercle 3 sur la cuve permet à l'enceinte de cuisson de monter en pression sans risque de voir le couvercle 3 échapper brutalement sous l'effet de la pression, avec tous les risques qu'une telle projection brutale du couvercle pourrait faire courir à l'utilisateur. Le moyen de verrouillage/déverrouillage 4 peut être de tout type connu de l'homme du métier, et est de façon classique susceptible d'évoluer entre une position verrouillée dans laquelle le couvercle 3 est solidarisé à la cuve, et une position déverrouillée dans laquelle le couvercle 3 peut être librement séparé de la cuve. A titre d'exemple d'un tel moyen de verrouillage/déverrouillage 4 utilisable dans le cadre de l'invention, on peut citer un moyen de verrouillage/déverrouillage à mâchoires ou à segments, étant entendu que l'invention n'est bien entendu nullement limitée à un type particulier de moyen de verrouillage/déverrouillage 4.

Dans le cas d'un moyen de verrouillage/déverrouillage 4 à mâchoires, le moyen de verrouillage/déverrouillage 4 du couvercle 3 relativement à la cuve comprend avantageusement deux mâchoires montées mobiles à translation radiale sur et relativement au couvercle 3 par l'intermédiaire de bras entraîneurs correspondants, lesquels s'étendent de façon diamétralement opposée en regard de l'axe de symétrie général de l'appareil 1. Un tel système de verrouillage à mâchoires est bien connu de l'homme du métier, de sorte qu'il n'est pas nécessaire de le décrire plus avant ici. Dans la variante illustrée aux figures, le moyen de verrouillage/déverrouillage 4 est constitué par un système à baïonnettes bien connu en tant que tel, et mettant en oeuvre des rampes de cuve et de couvercle interverrouillables sous l'effet d'une rotation du couvercle 3 contre la cuve. Là encore, un tel système de verrouillage à baïonnettes est bien connu de l'homme du métier, de sorte qu'il n'est pas nécessaire de le décrire plus avant ici.

L'appareil de cuisson domestique 1 conforme à l'invention comprend par ailleurs au moins un premier organe de commande 9 conçu pour permettre à un utilisateur d'agir sur le fonctionnement de l'appareil de cuisson 1. Ce premier organe de commande 9 permet ainsi à l'utilisateur de piloter au moins en partie une ou plusieurs des fonctions de l'autocuiseur 1, comme par exemple, à titre purement illustratif et non limitatif, le verrouillage/déverrouillage du couvercle 3 relativement à la cuve et/ou la décompression de l'enceinte de cuisson et/ou le réglage du niveau de pression de fonctionnement.

Le premier organe de commande 9 en question est conformé pour pouvoir être actionné par l'utilisateur, c'est-à-dire être manipulé, de préférence directement, par l'utilisateur de façon que ce dernier puisse commander manuellement la fonction correspondante (et de préférence le réglage correspondant).

De préférence, le premier organe de commande 9 est conçu pour agir directement sur le fonctionnement de l'appareil 1, et de préférence sur le réglage de ce dernier, en réponse à une sollicitation manuelle de l'utilisateur.

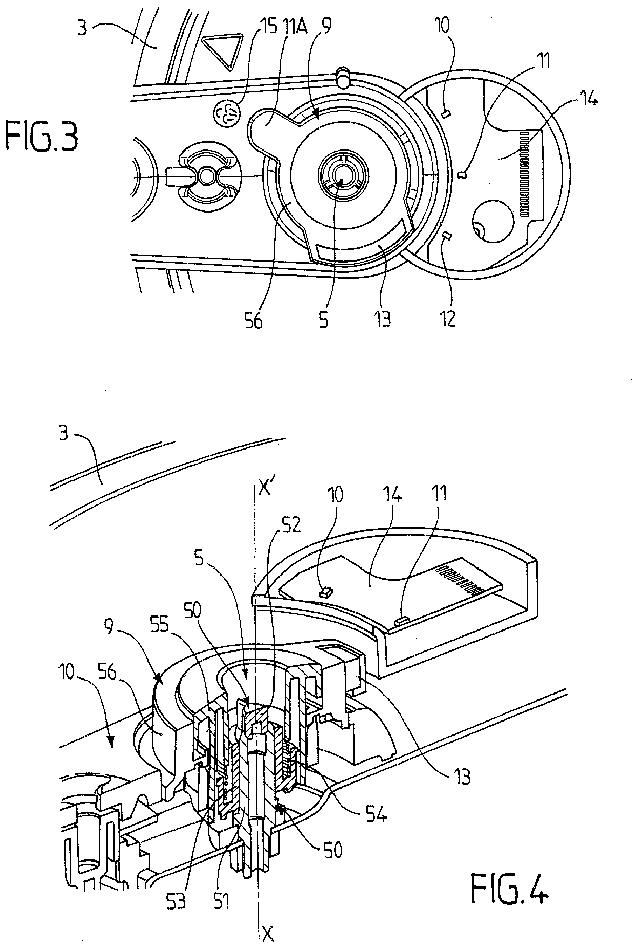

Le premier organe de commande 9 est mobile entre une pluralité de positions, chacune de ces positions correspondant à un fonctionnement et/ou à une configuration (réglage) spécifique de l'appareil de cuisson domestique 1. De préférence, chaque position qu'est susceptible d'adopter le premier organe de commande 9 est prédéterminée et aisément identifiable par l'utilisateur. En d'autres termes chaque position du premier organe de commande 9 est avantageusement indexée, et de préférence repérée par des icônes disposées sur le couvercle 3 (un exemple d'une telle icône 15 est représentée sur la figure 3). Avantageusement, le premier organe de commande 9 est conçu pour pouvoir être déplacé manuellement par l'utilisateur entre ses différentes positions.

Dans la variante préférentielle illustrée aux figures, le premier organe de commande 9 est conçu pour permettre à l'utilisateur d'agir sur le niveau de pression régnant dans l'enceinte de cuisson.

Par exemple, le premier organe de commande 9 est avantageusement mobile entre au moins :
- d'une part une position d'ouverture permettant de ramener ou de maintenir la pression régnant dans l'enceinte de cuisson à une valeur compatible avec un déverrouillage sécurisé du couvercle 3,
- et d'autre part au moins une position de cuisson autorisant une montée en pression de ladite enceinte de cuisson jusqu'à une valeur de pression incompatible avec un déverrouillage sécurisé du couvercle 3 relativement à la cuve.

Ainsi, l'organe de commande 9 constitue avantageusement un organe de pilotage du fonctionnement de l'appareil 1 permettant à l'utilisateur de régler le niveau de pression régnant dans l'enceinte de cuisson formée par l'appareil 1 à un niveau prédéterminé, ce niveau pouvant être nettement supérieur à la pression atmosphérique pour réaliser une cuisson d'aliments sous pression de vapeur (position de cuisson), ou être sensiblement égal, voire légèrement supérieur, à la pression atmosphérique pour permettre une ouverture sécurisée du couvercle 3 (position d'ouverture) sans risque de voir ce dernier être projeté sous l'effet de la pression. L'expression « *valeur de pression compatible avec un déverrouillage sécurisé du couvercle* » vise donc ici une valeur de pression suffisamment basse pour éviter tout phénomène d'échappement brutal du couvercle 3 lors de son déverrouillage par l'utilisateur (ouverture des mâchoires ou désengagement des rampes), qui pourrait conduire à un danger corporel pour ce dernier. Une telle valeur de pression compatible avec un déverrouillage sécurisé du couvercle 3 est par exemple choisie pour ne pas excéder la pression atmosphérique d'une valeur supérieure à 4 KPa.

Le premier organe de commande 9 permet ainsi de commander la décompression de l'appareil 1 (qui correspond à la position d'ouverture) ou la mise en configuration de cuisson dudit appareil 1 (qui correspond à la position de cuisson). De préférence, le premier organe de commande 9 est susceptible d'atteindre plusieurs positions de cuisson distinctes, correspondant chacune à une valeur de pression de fonctionnement spécifique, destinée à un type particulier d'aliments. Ainsi, l'utilisateur peut à volonté placer l'organe de commande 9 dans sa position d'ouverture, ou dans au moins une, et par exemple deux, trois ou quatre positions de cuisson différentes correspondant chacune à un niveau de cuisson prédéterminé spécifique régulé par un moyen de régulation de pression 5 qui va être décrit plus en détails dans ce qui suit.

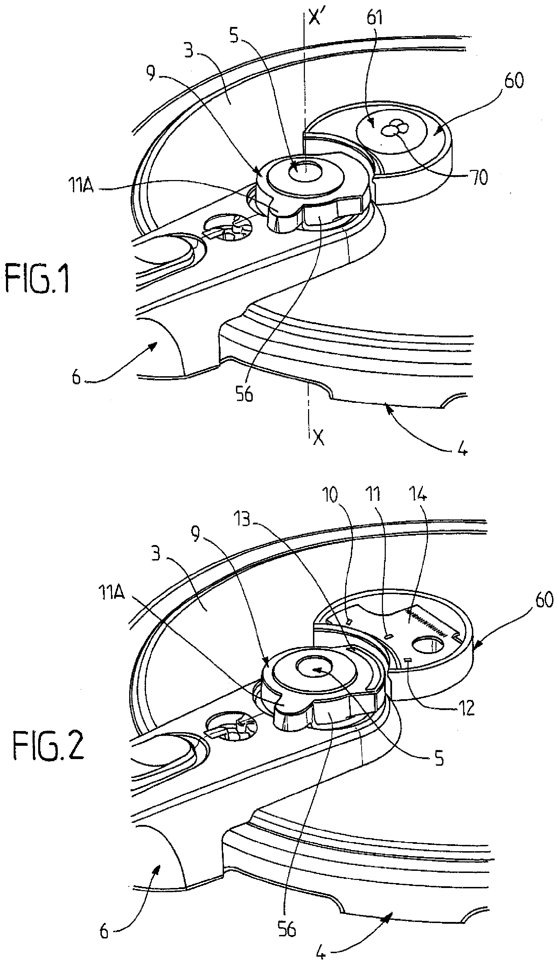

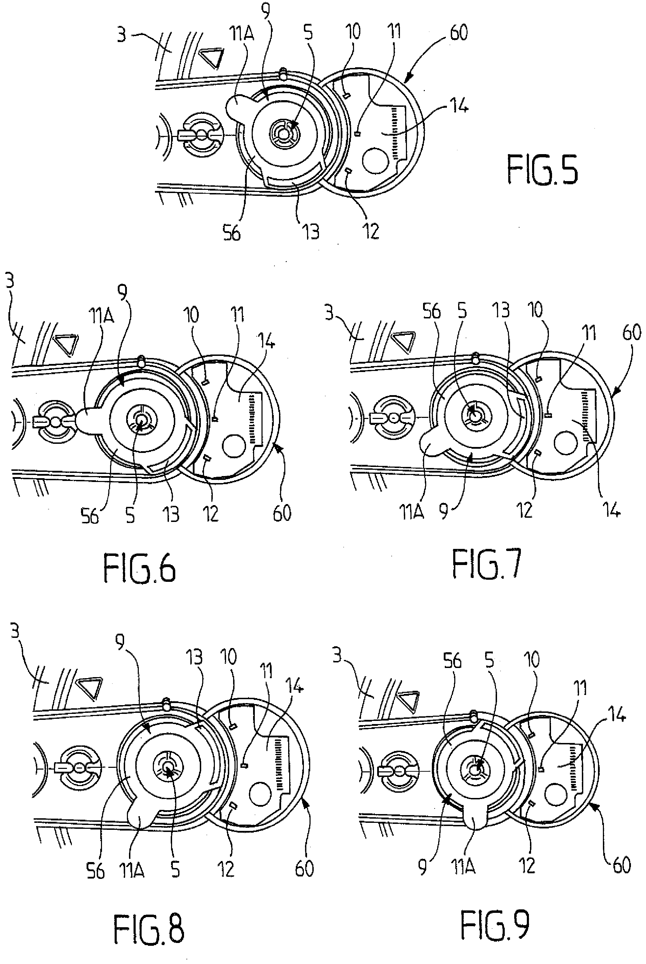

Le premier organe de commande 9 constitue ainsi de préférence un organe de sélection de pression permettant non seulement de régler le niveau de pression de cuisson mais également de commander la décompression de l'appareil 1. Par exemple, dans le mode de réalisation illustré aux figures, l'organe de commande 9 constitue un organe de sélection de pression mobile entre les quatre positions suivantes :
- une position d'ouverture, qui peut être également qualifiée de position de décompression (illustrée aux figures 3 et 5), dans laquelle l'intérieur de l'enceinte est mis en communication avec l'extérieur selon une section de fuite suffisante pour ramener ou maintenir la pression régnant dans l'enceinte de cuisson à une valeur compatible avec un déverrouillage sécurisé du couvercle 3 ;
- une première position de cuisson (illustrée à la figure 6) autorisant une montée en pression de l'enceinte de cuisson jusqu'à une première valeur de pression prédéterminée, régulée par le moyen de régulation de pression 5 et optimisée pour la cuisson de légumes, du genre haricots verts par exemple ;
- une deuxième position de cuisson (illustrée aux figures 1, 2, 4 et 7) autorisant une montée en pression de l'enceinte de cuisson jusqu'à une deuxième valeur de pression prédéterminée, supérieure à la première valeur de pression prédéterminée, ladite deuxième valeur de pression prédéterminée étant également régulée par le moyen de régulation de pression 5 et optimisée pour la cuisson de féculents, du genre pommes de terre par exemple ;
- une troisième position de cuisson (illustrée à la figure 8) autorisant une montée en pression de l'enceinte de cuisson jusqu'à une troisième valeur de pression prédéterminée qui est supérieure à la deuxième valeur de pression prédéterminée et qui est régulée par le moyen de régulation de pression 5, ladite troisième valeur de pression prédéterminée étant optimisée pour la cuisson de viandes par exemple ;
- et une quatrième position de cuisson (illustrée à la figure 9) autorisant une montée en pression de l'enceinte de cuisson jusqu'à une quatrième valeur de pression prédéterminée, supérieure à la troisième valeur de pression prédéterminée, et optimisée pour la cuisson de poissons par exemple, ladite quatrième valeur de pression prédéterminée étant bien entendu également régulée par le moyen de régulation de pression 5.

Avantageusement, le moyen de régulation de pression 5 comprend de façon classique une soupape de régulation 50 tarée, c'est-à-dire que ladite soupape 50 est soumise à un effort de rappel calibré réglable la rappelant en permanence dans une position d'obturation, dans laquelle elle interrompt toute communication de fluide entre l'intérieur de l'enceinte de cuisson et l'extérieur. Dans l'exemple illustré aux figures, la soupape de régulation tarée 50 comprend un siège de soupape 51 qui forme un conduit axial traversant le couvercle 3 pour mettre en communication l'intérieur de l'enceinte avec l'extérieur. La soupape 50 comprend également un corps de soupape formé lui-même d'une sphère 52 d'obturation du siège 51 et d'un manchon 53 solidaire de la sphère d'obturation 52 et monté à coulissement axial sur le siège 51. Un ressort 54 est interposé entre le manchon 53 et un capuchon 55 dont la position axiale, et plus précisément l'altitude par rapport au couvercle 3, est commandé, grâce à un système classique de rampes, par le premier organe de commande 9.

Le capuchon 55 permet ainsi de régler la compression du ressort 54, et donc de régler le niveau de l'effort de rappel exercé par le ressort 54 sur la sphère d'obturation 52, ledit niveau d'effort de rappel correspondant au tarage de la soupape 50.

Le capuchon 55 est ainsi capable de se déplacer entre différentes positions correspondant respectivement aux différentes positions de cuisson et de décompression.

La position de décompression correspond par exemple à un tarage minimal de la soupape, de sorte que cette dernière n'est sensiblement soumise qu'à son propre poids, qui est très faible, pour permettre une décompression de l'appareil 1. La mise en oeuvre d'un tel tarage de la soupape 50 est bien connue en tant que tel.

Dans ce mode de réalisation avantageux, le premier organe de commande 9 est monté mobile à rotation sur le couvercle 3 et permet de commander à la fois la décompression et le tarage en agissant sur la position axiale du capuchon 55. De préférence, le premier organe de commande 9 comporte dans ce cas une couronne rotative 56 montée à rotation sur le couvercle 3, et comportant un bouton de commande 11A conçu pour pouvoir être facilement saisi manuellement par l'utilisateur, et par l'intermédiaire duquel l'utilisateur est en mesure de faire tourner le premier organe de commande 9, et donc la couronne rotative 56. Une telle architecture de soupape tarée, décrite à titre purement illustratif et non limitatif, est bien connue en tant que telle dans le domaine.

Avantageusement, l'appareil 1 comprend un deuxième organe de commande 6 conçu pour permettre à l'utilisateur d'agir sur le verrouillage / déverrouillage du couvercle 3 relativement à la cuve, ledit deuxième organe de commande 6 étant distinct du premier organe de commande 9, c'est-à-dire que le premier organe de commande 9 ne permet pas d'agir sur le verrouillage/déverrouillage du couvercle 3 relativement à la cuve 2. Le deuxième organe de commande 6 peut être de tout type connu de i'homme du métier.

Par exemple, dans le cas où le moyen de verrouillage / déverrouillage 4 est un système à mâchoires, le deuxième organe de commande 6 pourra comprendre un bouton ou un levier rotatif permettant de commander le déplacement radial des mâchoires. Dans le cas illustré aux figures (moyen de verrouillage / déverrouillage 4 à baïonnettes), l'organe de commande 6 pourra simplement comprendre une paire de poignées respectivement solidaires de la cuve et du couvercle et permettant à l'utilisateur de manoeuvrer la cuve et le couvercle pour faire s'inter-engager les rampes de cuve et de couvercle.

L'appareil de cuisson domestique 1 conforme à l'invention comprend en outre un dispositif d'information 60 relié audit premier organe de commande 9 pour émettre, de préférence à l'attention de l'utilisateur, un signal 70 caractéristique d'au moins une première position prédéterminée dudit premier organe de commande 9. En d'autres termes, il existe une liaison fonctionnelle entre le dispositif d'information 60 et le premier organe de commande 9 pour que l'atteinte, par le premier organe de commande 9, de sa première position prédéterminée, commande l'émission par le dispositif d'information 60 du signai 70 caractéristique (ou en d'autres termes représentatif) de la première position en question. Ainsi, le dispositif d'information 60 est relié au premier organe de commande 9 pour émettre un signal 70 caractéristique d'au moins une première position prédéterminée dudit premier organe de commande 9, dès que cette première position prédéterminée est atteinte par le premier organe de commande 9.

Grâce à cette mesure technique, l'utilisateur (ou un dispositif externe) est avantageusement informé de façon particulièrement fiable et intelligible de la présence du premier organe de commande 9 dans sa première position prédéterminée, laquelle correspond bien entendu à un état spécifique de l'appareil 1 comme exposé ci-après.

Par exemple, dans le cas où le premier organe de commande 9 est constitué, comme illustré aux figures, par un sélecteur de pression commandant à la fois le tarage de la soupape 50 et la décompression de l'appareil 1, la première position prédéterminée peut avantageusement correspondre à la position d'ouverture ou à une position de cuisson.

Ainsi, dans l'exemple de la figure 1, le premier organe de commande 9 se trouve dans sa deuxième position de cuisson, qui correspond en l'espèce à ladite première position prédéterminée, ladite deuxième position de cuisson en question entraînant l'affichage, par le dispositif d'information 60, d'un signal 70 constitué d'une image (en l'occurrence un amas de pommes de terre) symbolisant le niveau de pression de fonctionnement sélectionné (qui en l'occurrence est particulièrement adapté pour la cuisson d'aliments du féculent).

Avantageusement, comme évoqué dans l'exemple qui précède, le dispositif d'information 60 est conçu pour que le signal 70 caractéristique de la première position prédéterminée du premier organe de commande 9 soit de nature sonore et/ou visuelle. Il est cependant tout à fait envisageable, dans une variante non revendiquée qui forme une invention indépendante en tant que telle, que le signal 70 soit simplement un signal électrique (ou optique...) imperceptible pour l'utilisateur, le signal 70 étant dans ce cas utilisé pour commander un dispositif tiers. Dans l'exemple précédemment évoqué (et illustré à la figure 1) où la première position prédéterminée correspond à une position de cuisson adaptée à la cuisson de féculents, le signal caractéristique 70 était en l'occurrence de nature exclusivement visuelle. A cette fin, le dispositif d'information 60 comprend bien entendu avantageusement un écran d'affichage 61 conçu pour afficher au moins un signe (par exemple un pictogramme symbolisant la nature des aliments auxquels est spécifiquement adapté le niveau de pression sélectionné par l'utilisateur) correspondant audit signal 70 caractéristique de la première position prédéterminée dudit premier organe de commande 9. L'écran d'affichage 61 en question peut reposer sur toutes technologies bien connues de l'homme du métier, et peut être par exemple constitué par un écran à cristaux liquides du type écran LCD.

De façon avantageuse, le dispositif d'information 60 est également conçu pour émettre un signal sonore en complément ou à la place du signal visuel affiché par l'écran 61. Il est tout à fait envisageable que le dispositif d'information 60 et le premier organe de commande 9 soient reliés de façon que le dispositif d'information 60 ne soit conçu que pour émettre un signal caractéristique d'une seule position du premier organe de commande 9, aucun signal n'étant émis lorsque le premier organe de commande 9 se trouve en dehors de cette position qui correspond à la première position prédéterminée évoquée ci-avant.

Par exemple, le dispositif d'information 60 peut être avantageusement conçu pour émettre un signal d'alarme tant que le premier organe de commande 9 est en position d'ouverture. Ce signal d'alarme peut par exemple consister en un signal sonore continu ou périodique, présentant de préférence un caractère strident afin d'alerter l'utilisateur sur le fait que le premier organe de commande 9 se trouve en position d'ouverture. Cela évite à l'utilisateur de lancer par inadvertance un cycle de cuisson alors que le premier organe 9 est en position d'ouverture et que donc l'enceinte de cuisson ne peut monter en pression.

Bien entendu, le signal d'alarme peut combiner la génération d'un son d'alarme avec l'affichage, sur l'écran 61 d'un signe d'alarme, éventuellement lumineux et/ou clignotant pour attirer l'attention de l'utilisateur.

Bien entendu, l'émission du signal d'alarme précité cesse dès que le premier organe de commande 9 a quitté sa position d'ouverture et se trouve en position de cuisson. Il est par ailleurs envisageable que le dispositif d'information 60 soit conçu pour émettre un signal d'alarme tant que le premier organe de commande 9 n'est pas en position de cuisson (ou dans l'une de ses positions de cuisson s'il y en plusieurs).

Ceci évite à l'utilisateur de lancer par inadvertance un cycle de cuisson alors que la position de cuisson est mal sélectionnée, le premier organe de commande 9 se trouvant par exemple malencontreusement entre deux positions de cuisson prédéterminées.

Bien entendu, il est tout à fait envisageable que le premier organe de commande 9 et le dispositif d'information 60 soient reliés pour que le dispositif d'information 60 émette, pour chaque position qu'est susceptible d'occuper le premier organe de commande 9, un signal caractéristique de la position en question. Ainsi, dans le cas où l'organe de commande 9 peut adopter cinq positions différentes, savoir une position d'ouverture (permettant la décompression de l'appareil 1) et quatre positions de cuisson correspondant chacune à un tarage spécifique de la soupape 50, le dispositif d'information 60 émettra un signal différent pour chacune de ces positions, ledit signal étant conçu pour que l'utilisateur puisse très rapidement distinguer dans quelle position se trouve le premier organe de commande 9.

Conformément à l'invention, lesdits dispositif d'information 60 et premier organe de commande 9 sont reliés, pour émettre ledit signal 70 caractéristique de ladite première position prédéterminée, par l'intermédiaire d'au moins un capteur 10, 11, 12 et d'au moins un activateur 13 conçu pour exciter à distance ledit capteur 10, 11, 12 lorsque le premier organe de commande 9 occupe sa première position prédéterminée, de façon que l'atteinte, par le premier organe de commande 9, de sa première position prédéterminée, commande l'émission par le dispositif d'information 60 dudit signal 70. En d'autres termes, le dispositif d'information 60 coopère avec le premier organe de commande 9 par l'intermédiaire d'une liaison fonctionnelle sans contact, établie à l'aide d'au moins un activateur 13 qui peut influencer à distance, sans contact direct ni interaction mécanique directe, au moins un capteur 10, 11, 12, de façon que le capteur 10, 11, 12 ainsi excité commande en retour l'émission, par le dispositif d'information 60, du signal 70 caractéristique de la première position prédéterminée.

De préférence, afin d'améliorer le degré de précision d'information fournie à l'utilisateur (ou à un dispositif externe), le dispositif d'information 60 et le premier organe de commande 9 sont reliés par l'intermédiaire d'une pluralité de capteurs 10, 11, 12 (par exemple au nombre de trois, savoir un capteur gauche 10, un capteur intermédiaire 11 et un capteur droit 12), et d'un activateur 13 unique conçu pour exciter sélectivement un ou plusieurs desdits capteurs 10, 11, 12 en fonction de la position du premier organe de commande 9.

Le recours à une telle liaison fonctionnelle sans contact entre les dispositif d'information 60 et premier organe de commande 9 permet de conférer un caractère particulièrement fiable et robuste à l'appareil 1 en limitant le risque d'encrassement. La solution technique retenue permet également de ne sensiblement pas accroître la complexité et l'encombrement mécanique de l'appareil 1, et permet de conserver un caractère entièrement autonome au dispositif d'information 60, de sorte qu'il est tout à fait envisageable que ce dernier soit monté de façon amovible sur l'appareil 1.

Avantageusement, l'activateur 13 est embarqué sur le premier organe de commande 9, c'est-à-dire qu'il est solidaire dudit premier organe 9 et est donc mobile avec ce dernier.

Avantageusement, le (ou les) capteurs 10, 11, 12 sont quant à eux montés de façon fixe en position sur l'appareil 1, et sont de préférence embarqués sur le dispositif d'information 60. Ainsi, dans le mode de réalisation particulièrement avantageux illustré aux figures, l'activateur 13 tourne avec le premier organe de commande 9, tandis que les capteurs 10, 11, 12 restent immobiles en des positions prédéterminées.

Avantageusement et comme illustré aux figures, l'activateur 13 est conçu pour se déplacer selon une trajectoire sensiblement circulaire autour de l'axe de rotation X-X' du premier organe de commande 9, les capteurs étant disposés selon un arc de cercle sensiblement concentrique à l'axe X-X' de rotation du premier organe de commande 9, à distance les uns des autres de sorte que la distance entre l'activateur 13 et les capteurs 10, 11, 12 varient en fonction de la position occupée par le premier organe de commande 9, cette distance permettant aux capteurs 10, 11, 12, lorsqu'elle est suffisamment petite, de capter la sollicitation d'excitation générée, de préférence en permanence, par l'activateur 13. Ainsi, le déplacement du premier organe de commande 9 entre ses différentes positions indexées permet de rapprocher sélectivement l'activateur 13 des capteurs 10, 11, 12 afin d'exciter soit l'un de ces capteurs, soit plusieurs de ces capteurs, soit aucun de ces capteurs.

Avantageusement, le (ou chaque) capteur 10, 11, 12 est un capteur magnétique, tandis que l'activateur 13 comprend un aimant. Ainsi, chaque capteur magnétique 10, 11, 12 est capable de générer un signal, par exemple un signal électrique en réponse à la soumission du ou des capteurs 10, 11, 12 concernés au champ magnétique exercé par l'aimant de l'activateur 13. De façon avantageuse, le (ou chaque) capteur 10, 11, 12 est un capteur magnéto-résistif, de préférence de type C-MOS.

Le recours à un capteur magnéto-résistif est particulièrement avantageux en ce qu'il tolère une certaine marge d'erreur dans le positionnement relatif du capteur et de l'activateur pour exciter ledit capteur à l'aide de l'activateur. Cela signifie que la tolérance de positionnement relative de l'activateur 13 et du (ou des) capteurs 10, 11, 12 peut être relativement importante sans nuire à la fiabilité de l'information communiquée à l'utilisateur (ou à tout dispositif externe).

Le recours à la technologie C-MOS permet en outre de bénéficier de capteurs 10, 11, 12 extrêmement légers et d'encombrement réduit, qui peuvent facilement être implantés sur des conceptions existantes d'autocuiseur sans qu'il soit nécessaire de recourir à des modifications complexes de conception. Le recours à de tels capteurs magnétiques du type C-MOS magnéto-résistifs permettent ainsi de bénéficier à coût réduit d'un système d'information extrêmement fiable (pas de risque d'encrassement ou de grippage mécanique) et facile à implanter, la petite taille des capteurs 10, 11, 12 permettant en outre de multiplier ces derniers sans que cela n'ait d'influence notable sur l'encombrement mécanique global. Le recours à d'autres capteurs (comme des interrupteurs ou relais Reed) est cependant tout à fait envisageable sans que l'on sorte du cadre de l'invention.

Bien entendu, l'invention n'est absolument pas limitée à la mise en oeuvre d'un couple activateur 13 / capteurs 10, 11, 12 reposant sur un principe magnéto-résistif. Il est par exemple tout à fait envisageable que l'activateur 13 comprenne un aimant tandis que le (ou chaque capteur) 10, 11, 12 est un capteur magnéto-inductif. Il est également envisageable que l'activateur 13 comprenne une source de lumière tandis que le (ou chaque) capteur 10, 11, 12 est un capteur optique.

En définitive, l'essentiel pour la simplicité et la fiabilité de l'appareil 1 est de mettre en oeuvre une liaison fonctionnelle non mécanique, sans contact direct, entre le premier organe de commande 9 et le dispositif d'information 60.

La description qui suit sera essentiellement dirigée vers un activateur 13 comprenant un aimant et des capteurs 10, 11, 12 de type C-MOS magnéto-résistif, pour des raisons de simplicité de description et de concision. Dans ce cas de figure et selon un mode de réalisation particulièrement avantageux, le dispositif d'information 60 se présente sous la forme d'un module électronique pourvu d'un circuit imprimé 14 sur lequel sont montés, de préférence directement, les capteurs 10, 11, 12. De préférence, comme illustré aux figures, les capteurs sont régulièrement espacés les uns des autres et sont disposés selon un arc de cercle concentrique à la trajectoire circulaire de l'aimant 13, lequel présente avantageusement une forme arquée concentrique à sa propre trajectoire. Afin de coder la position du premier organe de commande 9 sur toute la course angulaire de ce dernier, les capteurs 10, 11, 12 sont régulièrement espacés les uns des autres avec entre eux un secteur angulaire qui est égal au, ou est une fraction du, secteur angulaire correspondant à la course angulaire du premier organe de commande 9 entre chacune de ses positions. Le circuit imprimé 14 fait partie d'une unité de traitement qui permet de transformer les signaux émis par les capteurs 10, 11, 12 en un signal 70 avantageusement compréhensible par l'utilisateur, et qui est par exemple affiché sur l'écran 61 ou émis sous la forme d'un son à l'aide de moyens appropriés. Ainsi, chaque capteur 10, 11, 12 émet, lorsqu'il est excité par l'aimant de l'activateur 13, un signal électrique primaire qui est transformé par l'unité de traitement (comprenant le circuit imprimé 14) en ledit signal 70 caractéristique de la position du premier organe de commande 9.

Le circuit imprimé 14 constitue ainsi un moyen de traitement du signal qui permet de transformer le signal électrique généré par chaque capteur 10, 11, 12, lorsqu'il est soumis de façon suffisante au champ magnétique généré par l'aimant de l'activateur 13, en un signal d'information 70 qui est de préférence perceptible et compréhensible par l'utilisateur.

Avantageusement, le dispositif d'information 60 comprend d'une part un moyen de détection de l'atteinte d'une valeur prédéterminée de pression au sein de l'enceinte de cuisson, et d'autre part un minuteur relié fonctionnellement audit moyen de détection pour déclencher ledit minuteur dès que l'atteinte de ladite valeur de pression prédéterminée est détectée. En d'autres termes, le dispositif d'information 60 comprend dans ce cas un minuteur qui se déclenche dès que la cuisson sous pression a débuté. Le moyen de détection de l'atteinte d'une valeur prédéterminée de pression peut avantageusement comprendre un capteur de température, afin de détecter une température image de la pression régnant au sein de l'enceinte de cuisson.

Un tel minuteur est par exemple décrit dans le document FR-2 834 193, dont le contenu est incorporé ici. L'invention permet ainsi, en munissant simplement un tel minuteur à détection de température de capteurs magnéto-résistifs et en embarquant un aimant sur le premier organe de commande 9, d'augmenter considérablement les fonctionnalités dévolues au minuteur, dont l'écran et les moyens sonores pourront par exemple être utilisés pour informer l'utilisateur de la position occupée par le premier organe de commande 9.

Grâce à la mise en oeuvre d'une liaison fonctionnelle sans fil, basée sur l'excitation à distance d'un capteur par un activateur, il est donc possible de conférer ainsi de nouvelles propriétés aux minuteurs d'autocuiseur de l'art antérieur, sans avoir à procéder à des modifications de conception complexes ou onéreuses.

Comme exposé dans le document FR-2 834 193, le minuteur décrit dans le document FR-2 834 193 est relié fonctionnellement à un capteur de température destiné à capter l'augmentation de température résultant du passage de la vapeur à travers une sortie de vapeur dont est pourvu l'autocuiseur embarquant le minuteur.

La présente invention concerne ainsi avantageusement, selon un mode de réalisation particulier, un appareil de cuisson d'aliments sous pression comportant d'une part un moyen de commande de la décompression mobile entre une position de décompression et au moins une position de cuisson et d'autre part un capteur de température relié fonctionnellement par un circuit électrique à un minuteur, de manière à assurer le déclenchement de ce dernier en fonction de la température détectée par l'autocuiseur, ledit circuit électrique incluant un interrupteur Reed tandis que le moyen de commande de la décompression est équipé d'un aimant pour que lorsque le moyen de commande de la décompression se trouve dans sa position de décompression lesdits aimant et interrupteur Reed interagissent pour interrompre la liaison fonctionnelle entre le capteur de température et le minuteur.

Le fonctionnement d'un appareil 1 conforme à l'invention va maintenant être décrit en référence plus particulièrement aux figures 5 à 9.

L'utilisateur commence tout d'abord par installer des aliments dans la cuve de l'appareil de cuisson 1, puis rapporte le couvercle 3 sur la cuve et le verrouille sur cette dernière à l'aide du système à baïonnette permettant l'inter-engagement des rampes de cuve et de couvercle. A cet instant, le premier organe de commande 9 se trouve en position d'ouverture, tandis que le dispositif d'information 60 est hors tension.

L'utilisateur s'apprête alors à programmer, à l'aide de moyens adaptés (par exemple des boutons- poussoirs) une durée de cuisson sous pression sur le dispositif d'information 60, lequel intègre également, comme évoqué précédemment une fonction de minutage.

A cette fin, l'utilisateur met sous tension (par exemple en actionnant un interrupteur ou l'un des boutons-poussoirs précités) le dispositif d'information 60, c'est-à-dire qu'il alimente en énergie électrique le circuit imprimé 14. Ce dernier est ainsi en mesure de traiter les signaux électriques primaires éventuels qui lui parviennent des capteurs 10, 11, 12, selon que ces derniers sont ou non excités par l'aimant de l'activateur 13. A ce stade, c'est-à-dire lorsque le premier organe de commande 9 se trouve en position d'ouverture, l'aimant de l'activateur 13 se trouve suffisamment éloigné de l'ensemble des capteurs 10, 11, 12 pour qu'aucun d'eux ne soit excité. Le circuit imprimé 14 détecte ainsi qu'aucun des capteurs 10, 11, 12 n'est activé, ce qui entraîne en retour l'émission d'un signal d'alarme permettant de signaler à l'utilisateur qu'il n'a pas sélectionné une position de pression.

Ce signal d'alarme peut consister par exemple, comme évoqué précédemment, en un signal sonore relativement répétitif et strident, éventuellement associé à un signal visuel (par exemple clignotant et/ou lumineux) apparaissant sur l'écran 61.

Confronté à ce signal d'alarme, l'utilisateur pense alors à manipuler le premier organe de commande 9 pour l'amener dans l'une des quatre positions de pression prédéterminées prévues sur l'appareil 1 illustré aux figures. Ainsi, si le premier organe de commande 9 est amené dans sa première position de cuisson, illustrée à la figure 6, l'aimant de l'activateur 13 sera suffisamment proche du capteur droit 12 pour exciter ce dernier, mais suffisamment éloigné des deux autres capteurs 10, 11 pour que ces derniers ne soient au contraire pas excités.

Le circuit imprimé 14 détecte donc que le capteur droit 12 est excité tandis que les deux autres capteurs 10, 11 ne le sont pas, ce qui entraîne l'émission d'un signal spécifique caractéristique de cette première position de cuisson.

Si l'utilisateur sélectionne cette fois la deuxième position de cuisson (illustrée à la figure 7) l'aimant de l'activateur 13 sera dans ce cas suffisamment proche des capteurs intermédiaire 11 et droit 12 pour exciter ces derniers, mais suffisamment éloigné du capteur gauche 10 pour que ce dernier ne soit pas excité. Le circuit imprimé 14 détecte donc cette fois que le capteur intermédiaire 11 et le capteur droit 12 sont excités, ce qui entraîne l'émission d'un signal caractéristique de la deuxième position de cuisson. Si le premier organe de commande 9 est amené dans sa troisième position de cuisson, illustrée à la figure 8, l'aimant de l'activateur 13 sera cette fois suffisamment éloigné du capteur droit 12 pour ne pas exciter ce dernier, mais suffisamment proche des capteurs gauche 10 et intermédiaire 11 pour que ces derniers soient excités.

Le circuit imprimé 14 détecte donc cette configuration d'excitation particulière et commande en retour l'émission d'un signal spécifique caractéristique de cette troisième position de cuisson. Une logique similaire est mise en oeuvre avec la quatrième position de cuisson, dans laquelle seul le capteur gauche 10 est excité, ce qui entraîne la génération d'un signal caractéristique de cette quatrième position de cuisson.

Ainsi, le système activateur/capteur(s) prévu par l'invention, en particulier dans le cadre de la variante préférentielle illustrée aux figures, permet de coder numériquement la position du premier organe de commande 9 et ainsi de générer une information électrique, électronique, visuelle et/ou sonore, caractéristique de la position occupée par le premier organe de commande 9.

Dans un mode de réalisation alternatif non illustré aux figures, l'activateur 13 comprend non pas un unique aimant, mais une pluralité d'aimants distincts et espacés angulairement, afin de permettre des combinaisons supplémentaires de codage. Par exemple, le recours à deux aimants angulairement espacés pour former l'activateur 13 pourrait permettre d'exciter les capteurs gauche 10 et droit 12 sans exciter le capteur intermédiaire 11, ce qui n'était pas possible avec la variante décrite plus haut.

L'invention permet en définitive de guider de façon précise et fiable l'utilisateur dans la mise en oeuvre de l'appareil de cuisson 1, ce qui est particulièrement rassurant pour l'utilisateur.

### POSSIBILITE D'APPLICATION INDUSTRIELLE

L'invention trouve son application industrielle dans la conception, la fabrication et l'utilisation d'appareils de cuisson domestique.

## Revendications

1. Appareil (1) de cuisson domestique comprenant d'une part au moins un premier organe de commande (9) mobile entre une pluralité de positions et conçu pour permettre à un utilisateur d'agir sur le fonctionnement dudit appareil (1), et d'autre part un dispositif d'information (60) relié audit premier organe de commande (9) pour émettre un signal (70) de nature sonore et/ou visuelle caractéristique d'au moins une première position prédéterminée dudit premier organe de commande (9), **caractérisé en ce que** lesdits dispositif d'information (60) et premier organe de commande (9) sont reliés, pour émettre ledit signal (70), par l'intermédiaire d'au moins un capteur (10, 11, 12) et d'au moins un activateur (13) qui comprend un aimant exerçant un champ magnétique, ledit activateur (13) étant conçu pour exciter à distance, sans contact, par soumission audit champ magnétique, ledit capteur (10, 11, 12), lorsque le premier organe de commande (9) occupe ladite première position prédéterminée, de façon que l'atteinte, par le premier organe de commande (9), de sa première position prédéterminée, commande l'émission par le dispositif d'information (60) dudit signal (70).

2. Appareil (1) selon la revendication 1 **caractérisé en ce que** ledit activateur (13) est embarqué sur le premier organe de commande (9).

3. Appareil (1) selon la revendication 1 ou 2 **caractérisé en ce que** ledit capteur (10, 11, 12) est embarqué sur le dispositif d'information (60).

4. Appareil (1) selon l'une des revendications 1 à 3 **caractérisé en ce que** ledit capteur (10, 11, 12) est un capteur magnéto-résistif.

5. Appareil (1) selon la revendication 4 **caractérisé en ce que** ledit capteur (10, 11, 12) est un capteur de type C-MOS.

6. Appareil (1) selon l'une des revendications 1 à 5 **caractérisé en ce que** lesdits dispositif d'information (60) et premier organe de commande (9) sont reliés par l'intermédiaire :
- d'une pluralité de capteurs (10, 11, 12),
- et d'un activateur (13) unique conçu pour exciter sélectivement un ou plusieurs desdits capteurs (10, 11, 12) en fonction de la position du premier organe de commande (9).

7. Appareil (1) selon l'une des revendications 1 à 6 **caractérisé en ce qu'**il est constitué par un autocuiseur comprenant une cuve et un couvercle (3) destiné à être verrouillé sur ladite cuve pour former avec cette dernière une enceinte de cuisson.

8. Appareil (1) selon la revendication 7 **caractérisé en ce que** le premier organe de commande (9) est conçu pour permettre à l'utilisateur d'agir sur le niveau de pression régnant dans l'enceinte de cuisson.

9. Appareil (1) selon la revendication 8 **caractérisé en ce qu'**il comprend un deuxième organe de commande (6) conçu pour permettre à l'utilisateur d'agir sur le verrouillage/déverrouillage du couvercle (3) relativement à la cuve, ledit deuxième organe de commande (6) étant distinct du premier organe de commande (9).

10. Appareil (1) selon l'une des revendications 8 et 9 **caractérisé en ce que** le premier organe de commande (9) est mobile entre au moins d'une part une position d'ouverture permettant de ramener ou de maintenir la pression régnant dans l'enceinte de cuisson à une valeur compatible avec un déverrouillage sécurisé du couvercle (3) et d'autre part au moins une position de cuisson autorisant une montée en pression de ladite enceinte de cuisson jusqu'à une valeur de pression incompatible avec un déverrouillage sécurisé du couvercle (3).

11. Appareil (1) selon la revendication 10 **caractérisé en ce que** le dispositif d'information (60) est conçu pour émettre un signal d'alarme tant que le premier organe de commande (9) est en position d'ouverture.

12. Appareil (1) selon l'une des revendications 8 à 11 **caractérisé en ce que** le dispositif d'information (60) comprend d'une part un moyen de détection de l'atteinte d'une valeur prédéterminée de pression au sein de l'enceinte, et d'autre part un minuteur relié fonctionnellement audit moyen de détection pour déclencher ledit minuteur dès que l'atteinte de ladite valeur de pression prédéterminée est détectée.

13. Appareil (1) selon l'une des revendications 1 à 12 **caractérisé en ce que** le dispositif d'information (60) comprend un écran d'affichage (61) conçu pour afficher au moins un signe correspondant audit signal (70) caractéristique de la première position prédéterminée dudit premier organe de commande (9).

## Patentansprüche

1. Haushaltskochgerät (1), umfassend einerseits mindestens ein erstes Steuerelement (9), das zwischen einer Vielzahl von Positionen beweglich und eingerichtet ist, um es einem Benutzer zu ermöglichen, auf die Funktion des Geräts (1) einzuwirken, und andererseits eine Informationsvorrichtung (60), die mit dem ersten Steuerelement (9) verbunden ist, um ein Signal (70) vom akustischen und/oder visuellen Typ zu entsenden, das für mindestens eine erste vorbestimmte Position des ersten Steuerelements (9) charakteristisch ist, **dadurch gekennzeichnet, dass** die Informationsvorrichtung (60) und das erste Steuerelement (9) verbunden sind, um das Signal (70) mit Hilfe mindestens eines Sensors (10, 11, 12) und mindestens eines Aktivators (13), der einen Magneten umfasst, der ein Magnetfeld ausübt, zu senden, wobei der Aktivator (13) eingerichtet ist, um aus der Ferne kontaktlos durch Magnetfeldexposition den Sensor (10, 11, 12) zu erregen, wenn das erste Steuerelement (9) die erste vorbestimmte Position einnimmt, so dass das Erreichen seiner ersten vorbestimmten Position durch das erste Steuerelement (9) das Senden des Signals (70) durch die Informationsvorrichtung (60) steuert.

2. Gerät (1) nach Anspruch 1, **dadurch gekennzeichnet, dass** der Aktivator (13) in dem ersten Steuerelement (9) eingebaut ist.

3. Gerät (1) nach Anspruch 1 oder 2, **dadurch gekennzeichnet, dass** der Sensor (10, 11, 12) in der Informationsvorrichtung (60) eingebaut ist.

4. Gerät (1) nach einem der Ansprüche 1 bis 3, **dadurch gekennzeichnet, dass** der Sensor (10, 11, 12) ein magnetoresistiver Sensor ist.

5. Gerät (1) nach Anspruch 4, **dadurch gekennzeichnet, dass** der Sensor (10, 11, 12) ein Sensor vom Typ C-MOS ist.

6. Gerät (1) nach einem der Ansprüche 1 bis 5, **dadurch gekennzeichnet, dass** die informationsvorrichtung (60) und das erste Steuerelement (9) verbunden sind mit Hilfe:
- einer Vielzahl von Sensoren (10, 11, 12),
- und eines einzigen Aktivators (13), der eingerichtet ist, um selektiv einen oder mehrere der Sensoren (10, 11, 12) in Abhängigkeit von der Position des ersten Steuerelements (9) zu erregen.

7. Gerät (1) nach einem der Ansprüche 1 bis 6, **dadurch gekennzeichnet, dass** es von einem Dampfkochtopf gebildet ist, umfassend eine Wanne und einen Deckel (3), der dazu bestimmt ist, auf der Wanne verriegelt zu werden, um mit dieser letztgenannten einen Kochraum zu bilden.

8. Gerät (1) nach Anspruch 7, **dadurch gekennzeichnet, dass** das erste Steuerelement (9) eingerichtet ist, um es dem Benutzer zu ermöglichen, auf das in dem Kochraum herrschende Druckniveau einzuwirken.

9. Gerät (1) nach Anspruch 8, **dadurch gekennzeichnet, dass** es ein zweites Steuerelement (6) umfasst, das eingerichtet ist, um es dem Benutzer zu ermöglichen, auf die Verriegelung/Entriegelung des Deckels (3) in Bezug zur Wanne einzuwirken, wobei das zweite Steuerelement (6) vom ersten Steuerelement (9) getrennt ist.

10. Gerät (1) nach einem der Ansprüche 8 und 9, **dadurch gekennzeichnet, dass** das erste Steuerelement (9) zwischen mindestens einerseits einer Öffnungsposition, die es ermöglicht, den in dem Kochraum herrschenden Druck auf einen mit der gesicherten Entriegelung des Deckels (3) zu vereinbarenden Wert zu bringen oder auf diesem zu halten, und andererseits mindestens einer Kochposition beweglich ist, die einen Druckanstieg des Kochraums bis zu einem Druckwert, der mit einer gesicherten Entriegelung des Deckels (3) nicht vereinbar ist, gestattet.

11. Gerät (1) nach Anspruch 10, **dadurch gekennzeichnet, dass** die Informationsvorrichtung (60) eingerichtet ist, um ein Alarmsignal zu senden, solange das erste Steuerelement (9) in Öffnungsposition ist.

12. Gerät (1) nach einem der Ansprüche 8 bis 11, **dadurch gekennzeichnet, dass** die Informationsvorrichtung (60) einerseits ein Mittel zur Erfassung des Erreichens eines vorbestimmten Druckwerts innerhalb des Raums und andererseits einen Timer umfasst, der funktionell mit dem Erfassungsmittel verbunden ist, um den Timer auszulösen, sobald das Erreichen des vorbestimmten Druckwerts erfasst wird.

13. Gerät (1) nach einem der Ansprüche 1 bis 12, **dadurch gekennzeichnet, dass** die Informationsvorrichtung (60) einen Anzeigebildschirm (61) umfasst, der eingerichtet ist, um mindestens ein Zeichen anzuzeigen, das dem Signal (70), das für die erste vorbestimmte Position des ersten Steuerelements (9) charakteristisch ist, entspricht.

## Claims

1. A household cooking utensil (1) having firstly at least a first control member (9) mounted to move between a plurality of positions and designed to enable the user to act on operation of said utensil (1), and secondly an information device (60) connected to said first control member (9) for the purpose of emitting a signal (70) of audible and/or visible nature that is characteristic of at least a first predetermined position of said first control member (9), **characterized in that** said information device (60) and said first control member (9) are interconnected, for the purposes of emitting said signal (70), via at least one sensor (10, 11, 12) and via at least one activator (13) which comprises a magnet exerting a magnetic field, said activator (13) being designed to excite said sensor (10, 11, 12) remotely, without contact, by subjecting it to said magnetic field, when the first control member (9) occupies said first predetermined position, so that the first control member (9) reaching its first predetermined position causes said information device (60) to emit said signal (70).

2. A utensil (1) according to claim 1, **characterized in that** said activator (13) is incorporated in the first control member (9).

3. A utensil (1) according to claim 1 or claim 2, **characterized in that** said sensor (10, 11, 12) is incorporated in the information device (60).

4. A utensil (1) according to any one of claims 1 to 3, **characterized in that** said sensor (10, 11, 12) is a magneto-resistive sensor.

5. A utensil (1) according to claim 4, **characterized in that** said sensor (10, 11, 12) is a sensor of the C-MOS type.

6. A utensil (1) according to any one of claims 1 to 5, **characterized in that** said information device (60) and said first control member (9) are interconnected via:
- a plurality of sensors (10, 11, 12); and
- a single activator (13) designed to excite selectively one or more of said sensors (10, 11, 12) as a function of the position of the first control member (9).

7. A utensil (1) according to any one of claims 1 to 6, **characterized in that** it is constituted by a pressure cooker comprising a vessel and a lid (3) designed to be locked on said vessel to form a cooking closure therewith.

8. A utensil (1) according to claim 7, **characterized in that** the first control member (9) is designed to enable the user to act on the pressure level prevailing inside the cooking enclosure.

9. A utensil (1) according to claim 8, **characterized in that** it has a second control member (6) designed to enable the user to act on the locking/unlocking of the lid (3) relative to the vessel, said second control member (6) being distinct from the first control member (9).

10. A utensil (1) according to claim 8 or claim 9, **characterized in that** the first control member (9) is mounted to move between at least firstly an opening position enabling the pressure prevailing inside the cooking enclosure to be brought back to or maintained at a value compatible with safe unlocking of the lid (3), and secondly at least one cooking position allowing pressure to build up inside said cooking enclosure to a pressure level incompatible with safe unlocking of the lid (3).

11. A utensil (1) according to claim 10, **characterized in that** the information device (60) is designed to emit an alarm signal so long as the first control member (9) is in the opening position.

12. A utensil (1) according to any one of claims 8 to 11, **characterized in that** the information device (60) comprises firstly detection means for detecting when a predetermined pressure value is reached inside the enclosure, and secondly a timer functionally linked to said detection means so as to trigger said timer as soon as it is detected that said predetermined pressure value has been reached.

13. A utensil (1) according to any one of claims 1 to 12, **characterized in that** the information device (60) further comprises a display screen (61) designed to display at least one sign corresponding to said signal (70) characteristic of the first predetermined position of said first control member (9).
